# EUROPÄISCHE PATENTSCHRIFT

(11) **EP 3 821 083 B1**
(45) Veröffentlichungstag und Bekanntmachung des Hinweises auf die Patenterteilung: **31.05.2023**
(21) Anmeldenummer: 19769857.4
(22) Anmeldetag: 09.07.2019
(51) Int. Cl.: E02D 27/42, E04H 12/16, F03D 13/20

(54) **FUNDAMENT FÜR EIN WINDKRAFTWERK**
FOUNDATION FOR A WIND MOTOR
FONDATION D'UNE EOLIÈNNE

(30) Priorität: 13.07.2018 AT 2072018
(43) Veröffentlichungstag der Anmeldung: 19.05.2021
(73) Patentinhaber: Holcim Technology Ltd, 6300 Zug (CH)
(72) Erfinder: STECHER, Arne, 5113 Holderbank (CH); SCHULDT, Christian, 5113 Holderbank (CH)
(74) Vertreter: Keschmann, Marc
(86) Internationale Anmeldenummer: PCT/IB2019/055822
(87) Internationale Veröffentlichungsnummer: WO 2020/012345

(56) Entgegenhaltungen:
- WO-A1-2016/112376
- WO-A1-2018/055446
- WO-A2-2004/101898
- DE-A1-102013 226 536

## Beschreibung

Die Erfindung betrifft ein Fundament für ein Windkraftwerk mit einem in mehrere Umfangsabschnitte unterteilten, aus vorgefertigten Betonelementen zusammengesetzten Standring mit einer Standfläche für einen Windkraftwerksturm und mehreren sich vom Standring radial nach außen erstreckenden Stützelementen, wobei der Standring durch Verstrebungsrippen an den Stützelementen abgestützt ist.

Ferner betrifft die Erfindung eine Windturbine mit einem einen Rotor umfassenden Windturbinenturm, wobei der Windturbinenturm auf einem Fundament montiert ist.

In der WO 2004/101898 A2 wie auch in der WO2018/055446 A1 ist ein Fundament für ein Windkraftwerk offenbart. Wie dort beschrieben ist, ist für die Herstellung des Fundaments von Onshore-Windkraftanlagen ein hoher manueller und administrativer Aufwand erforderlich, und die Herstellung ist sehr zeitaufwendig. Angesichts der zunehmenden Abmessungen moderner Windturbinen ist das Fundament sehr hohen Lasten ausgesetzt und muss entsprechend dimensioniert werden. Heutige Windturbinen haben einen Turm mit einer Höhe von bis zu 150 m und erzeugen bis zu 6 MW. In der Mehrzahl der Fälle besteht der Turm oder Mast von Windturbinen aus verstärktem Beton und wird unter Verwendung vorgefertigter Betonelemente gebaut. Alternativ kann der Windkraftwerksturm auch von einer Stahlkonstruktion gebildet sein.

Vor dem Aufkommen von Fundamenten aus vorgefertigten BetonFertigteilen wurden die Fundamente für Windkraftanlagen im Wesentlichen durch Ausgraben einer Baugrube, Einbringen einer körnigen Unterstruktur, Errichten einer Fundamentkomponente, Ausführen der notwendigen Einschalungs- und Verstärkungsarbeiten und anschließendes Füllen der Baugrube mit Ortbeton hergestellt, wobei der Beton als Transportbeton durch Fahrmischer zur Arbeitsstelle transportiert und in die Baugrube gegossen wurde. Die zentrale Fundamentkomponente weist gewöhnlich eine hohlzylindrische Konfiguration auf und wurde im Allgemeinen vorgefertigt und als Einheit zur jeweiligen Montagestelle transportiert.

Die Herstellung eines Windmühlenfundaments durch Ortbeton ist mit einer Mehrzahl von Nachteilen verbunden. Sie erfordert eine komplexe Logistik für die Planung der Herstellungsaktivitäten an der Baustelle und sie ist im Hinblick auf die Errichtung der Einschalung und der Verstärkungsstruktur sowie auf das Transportieren und Gießen des Betons mit zeitaufwendigen und kostspieligen Vorgängen an der Baustelle verbunden. Dies gilt insbesondere angesichts dessen, dass mehr als 1000 m³ Beton für große Fundamente erforderlich sein können.

Um den Bauprozess eines Fundaments zu verbessern, wurde bereits in der WO 2004/101898 A2 vorgeschlagen, das Fundament unter Verwendung vorgefertigter Betonelemente zu bauen. Solche Betonelemente werden in einem Beton-Fertigteilwerk hergestellt und zur Arbeitsstelle transportiert, wo sie durch die Verwendung eines Krans in Position gebracht und dann miteinander verbunden werden. Auf diese Weise kann die Dauer der Bauvorgänge an der Arbeitsstelle erheblich verringert werden. Die vorgefertigten Betonelemente bilden, wenn sie miteinander verbunden sind, ein Fundament mit einem zentralen Standring und mehreren Stützelementen, die jeweils vom Standring radial nach außen vorstehen. Jedes vorgefertigte Betonelement bildet eines der Stützelemente und einen zugeordneten Ringabschnitt des Standrings. Die Ringabschnitte des Standrings werden durch verschraubte Flansche miteinander verbunden. Wie in der WO 2004/101898 A2 beschrieben ist, können die vorgefertigten Betonelemente stahlverstärkt sein. Nachdem das Fundament gebildet wurde, wird der Turm oder Mast der Windmühle auf dem Standring errichtet und mittels Ankerbolzen am Standring befestigt.

Durch die Verwendung vorgefertigter Betonelemente kann in einer kontrollierten Umgebung produziert werden, sodass die Qualität des ausgehärteten Betons verbessert werden kann. Von einem finanziellen Gesichtspunkt betrachtet, können die in einer Vorfertigungsanlage verwendeten Formen viele Male wiederverwendet werden, bevor sie ersetzt werden müssen, sodass die Kosten für die Form bzw. die Einschalung pro Einheit niedriger sind als bei einer Herstellung mit Ortbeton, die jedes Mal eine eigens errichtete Schalung erfordert. Die Schalung kann zwar mehrfach verwendet werden, muss aber von Ort zu Ort transportiert und entsprechend gereinigt werden.

Windturbinen sind Lasten und Beanspruchungen spezifischer Natur ausgesetzt, die vom Fundament aufgenommen werden müssen. Der Wind selbst wirkt in einer nicht vorhersehbaren und veränderlichen Weise. Andererseits wirken mit immer größeren Anlagen dynamische Lastkomponenten infolge von Vibrationen und Resonanzen auf die Struktur. Ferner übertragen Türme mit einer Höhe von 100 Metern und mehr infolge des auftretenden Kippmoments erhebliche exzentrische Lasten auf das Fundament. Der Beton des Fundaments muss dabei einer Kompression widerstehen, die in der komprimierten Zone auftritt, und die Verstärkungsstruktur des Betons muss die Dehnungskräfte im entgegengesetzten Teil des Fundaments aufnehmen, weil der Beton selbst eine verhältnismäßig geringe Dehnungsfestigkeit aufweist. Fundamente aus vorgefertigten verstärkten Betonelementen haben den Vorteil, dass die Leistungsfähigkeit und die Qualität des Betons, wie auch die Qualität der Herstellung insbesondere des Nachbereitungs- und Aushärteprozesses höher sind, so dass ein geringeres Risiko einer Rissbildung und eine höhere Widerstandsfähigkeit gegenüber dynamischen und statischen Lasten gegeben sind. Dies gilt insbesondere auch deshalb, weil die Aushärtung des Betons unter kontrollierbaren Bedingungen erfolgt und somit kein dahingehendes Witterungsrisiko auf der Baustelle besteht.

Während die Verwendung von vorgefertigten Betonelementen somit eine Reihe von Vorteilen gegenüber dem Gießen eines Fundaments aus Ortbeton aufweist, wird das Zusammenfügen der vorgefertigten Betonelemente zum fertigen Fundament, was durch das Verschrauben von Flanschen an den Ringabschnitten des Standrings erfolgt, als verbesserungswürdig angesehen. Mitunter weisen Fundamente für große Windkraftwerke Standringe aus zwölf oder sechzehn Ringabschnitten und mehr auf, damit die einzelnen vorgefertigten Betonelemente klein genug für den Transport mit herkömmlichen Lastfahrzeugen bleiben können. In der Folge müssen zur Herstellung des Fundaments hunderte Schrauben gesetzt werden, was naturgemäß zeitaufwendig ist und eine sehr genaue initiale Positionierung der miteinander zu verbindenden Betonelemente zueinander erfordert, um die Schraubbolzen in die entsprechenden Bohrungen an den Flanschen einsetzen zu können.

Der Erfindung liegt daher die Aufgabe zugrunde, ein Fundament der eingangs genannten Art dahingehend zu verbessern, dass das Zusammensetzen der Ringabschnitte zum fertigen Fundament gegenüber dem Zusammensetzen durch Verschraubung weniger zeitaufwendig erfolgen kann und keine allzu große Genauigkeit beim Ausrichten der Betonelemente zueinander vor dem Zusammenfügen an den Tag gelegt werden muss.

Zur Lösung dieser Aufgabe ist ein Fundament der eingangs genannten Art erfindungsgemäß dahingehend weitergebildet, dass der Standring an seinem die Standfläche ausbildenden Ende einen umlaufenden, sich vom Standring radial nach außen erstreckenden Vorsprung aufweist mit zumindest einem im Vorsprung vorgesehenen und in Umfangsrichtung verlaufenden Kanal zur Aufnahme eines Spannkabels.

Dadurch, dass ein umlaufender, sich radial vom Standring nach außen erstreckender Vorsprung geschaffen wird, der im oberen Bereich, d.h. am Ende mit der Standfläche des Standrings angesetzt ist, wird die Möglichkeit geschaffen, ohne das Verschrauben der vorgefertigten Betonelemente das Auslangen zu finden, da zumindest ein Spannkabel, in der Regel aber eine Mehrzahl von Spannkabeln zum Zusammenspannen der vorgefertigten Betonelemente im oberen Bereich des Fundaments auf einem relativ großen Umfang geführt werden kann. Ein auf großem Umfang geführtes Spannkabel kann eine bessere Spann- und Fügekraft entwickeln als Spannkabel, die auf kleinem Umfang laufen, sodass mit der erfindungsgemäßen Maßnahme eine hocheffiziente Verspannung der vorgefertigten Betonelemente erzielt wird. Folglich kann auf die Verschraubung der Betonelemente weitgehend oder vollkommen verzichtet werden. Zum Einführen und Spannen der Spannkabel ist es ausreichend, wenn die vorgefertigten Betonelemente an der gewünschten Stelle möglichst nahe zueinander positioniert werden, wobei jedoch keine genaue Ausrichtung von Bohrlöchern zueinander erfolgen muss. Hierauf kann das Spannkabel oder die Mehrzahl von Spannkabeln in den im Vorsprung laufenden Kanal eingeführt und zusammengezogen werden. Dabei werden die vorgefertigten Betonelemente zusammengezogen und zueinander ausgerichtet und das fertige Fundament wird ohne Verschraubungen erhalten.

Eine zusätzliche Verspannung im oberen Bereich des Fundaments kann erfolgen, wenn der Standring an seinem die Standfläche ausbildenden Ende einen umlaufenden, sich vom Standring radial nach innen erstreckenden Vorsprung aufweist mit zumindest einem im Vorsprung vorgesehenen und in Umfangsrichtung verlaufenden Kanal zur Aufnahme eines Spannkabels, wie dies einer bevorzugten Ausführungsform der vorliegenden Erfindung entspricht. Die Spannkabel im innenliegenden Vorsprung sind zum Ausüben einer Spannkraft aufgrund des geringeren Umfangs weniger günstig gelegen als jene im zuvor genannten außenliegenden Vorsprung, ein Spannkabel bzw. eine Mehrzahl von Spannkabeln in diesem Vorsprung trägt aber dennoch in nicht unerheblichem Ausmaß zur Gesamtfestigkeit des Fundaments bei und kann daher mit Vorteil im Zusammenhang mit der vorliegenden Erfindung zum Einsatz gebracht werden.

Gemäß einer bevorzugten Ausführungsform der vorliegenden Erfindung weisen die Stützelemente zumindest einen in Umfangsrichtung verlaufenden Kanal zur Aufnahme eines Spannkabels auf. Die Stützelemente erstrecken sich wie der außenliegende Vorsprung vom Standring nach außen und können daher ebenfalls Kabelkanäle für Spannkabel enthalten, die aufgrund des relativ großen Umfangs eine sehr hohe Spannkraft auf den aus den vorgefertigten Betonelementen zusammengefügten Standring bzw. auf das Fundament ausüben können. Der zumindest eine Kanal zur Aufnahme eines Spannkabels ist daher im Rahmen der vorliegenden Erfindung eine ideale Ergänzung zu dem zumindest einen im außen am Standring umlaufenden Vorsprung vorgesehenen und in Umfangsrichtung verlaufenden Kanal zur Aufnahme eines Spannkabels.

Zur weiteren Steigerung der Festigkeit des erfindungsgemäß ohne bzw. weitgehend ohne Verschraubungen zusammengefügten Fundaments ist es gemäß einer bevorzugten Ausführungsform der vorliegenden Erfindung vorgesehen, dass die Stützelemente benachbarter Ringabschnitte in einem radial inneren Bereich aneinander anliegen. Die aneinander anliegenden Stützelementen, d.h. die aneinander anliegenden Seitenflächen könne hohe Reibungskräfte aufnehmen und tragen damit wesentlich zur Gesamtfestigkeit des erfindungsgemäßen Fundaments bei. Dies gilt vor allen Dingen dann, wenn die Stützelemente zumindest einen in Umfangsrichtung verlaufenden Kanal zur Aufnahme eines Spannkabels aufweisen, wie dies oben beschrieben wird. Spannkabel in den Stützelementen pressen diese mit großer Kraft aneinander und erzeugen auf diese Weise eine Flächenpressung zwischen den Stützelementen, die das gesamte Fundament stabilisieren. Damit die Stützelemente benachbarter Ringabschnitte in einem inneren Bereich aneinander anliegen, sind die Stützelemente dergestalt ausgebildet, dass sie an ihrem Ursprung am Standring bzw. Standringabschnitt die Breite des Standringabschnittes aufweisen und sich die Breite stetig entsprechend jenem Öffnungswinkel vergrößert, der sich aus 360° geteilt durch die Anzahl der Ringabschnitte des Fundaments ergibt.

Schließlich, und gemäß einer bevorzugten Ausführungsform der vorliegenden Erfindung, erstrecken sich die Stützelemente von dem der Standfläche gegenüberliegenden Ende des Standrings radial nach außen und der Standring weist an seinem die Stützelemente aufweisenden Ende einen umlaufenden, sich vom Standring radial nach innen erstreckenden Vorsprung auf mit zumindest einem im Vorsprung vorgesehenen und in Umfangsrichtung verlaufenden Kanal zur Aufnahme eines Spannkabels. Die Spannkabel im innenliegenden Vorsprung sind zum Ausüben einer Spannkraft aufgrund des geringeren Umfangs weniger günstig gelegen als jene im zuvor genannten außenliegenden Vorsprung bzw. als jene in den Stützelementen, ein Spannkabel bzw. eine Mehrzahl von Spannkabeln in diesem Vorsprung trägt aber dennoch in nicht unerheblichem Ausmaß zur Gesamtfestigkeit des Fundaments bei und kann daher mit Vorteil im Zusammenhang mit der vorliegenden Erfindung zum Einsatz gebracht werden.

Eine weitere bevorzugte Ausbildung der Erfindung sieht vor, dass im umlaufenden, sich vom Standring am die Standfläche ausbildenden Ende radial nach innen erstreckenden Vorsprung zusätzlich in Achsrichtung des Standringes verlaufende Kanäle vorgesehen sind zur Aufnahme von Verankerungsmitteln zum Verankern des Windkraftwerksturms am Standring, insbesondere in Form von Ankerbolzen und/oder Seilverspannungen. Die Ankerbolzen sind in der Regel zum Befestigen eines als Stahlkonstruktion ausgebildeten Turms vorgesehen. Die Seildurchführungen sind in der Regel für die Befestigung von Betontürmen vorgesehen.

Bevorzugt ist ein Ringabschnitt mit zumindest einem sich vom Ringabschnitt radial nach außen erstreckenden Stützelement mit einer Verstrebungsrippe jeweils als vorgefertigtes Betonelement einstückig ausgebildet. Ein solches vorgefertigtes Betonelement wird gemäß dieser bevorzugten Ausführungsform der vorliegenden Erfindung durch Gießen hergestellt und aus der Gussform unmittelbar erhalten. Dies stellt eine Vereinfachung des Herstellungsverfahrens gegenüber einem Verfahren dar, bei dem mehrere Betonteile zusammengesetzt werden müssen.

Die Erfindung ist bevorzugt dahingehend weitergebildet, dass ein Ringabschnitt zumindest zwei sich vom Ringabschnitt radial nach außen erstreckende Stützelemente mit jeweils einer Verstrebungsrippe umfasst. Ein solcher einstückiger Ringabschnitt des erfindungsgemäßen Fundaments kann beispielsweise einen Viertelkreis beschreiben und die entsprechende Anzahl an Stützelementen mit primären Verstrebungsrippen aufweisen. Wenn das fertige Fundament beispielsweise acht Stützelemente aufweisen soll, weist ein einstückiger Umfangsabschnitt der Basis, der einen Viertelkreis beschreibt, zwei Stützelemente mit entsprechend zwei primären Verstrebungsrippen auf.

Um die Spannkabel beim Zusammensetzen des erfindungsgemäßen Fundaments einfach spannen zu können, ist das erfindungsgemäße Fundament bevorzugt dahingehend weitergebildet, dass die in Umfangsrichtung verlaufenden Kanäle durch Ausnehmungen zur Aufnahme von Spannmitteln für Spannkabel zugänglich gemacht sind. Die Ausnehmungen sind demgemäß in den jeweiligen Strukturen der Ringabschnitte vorgesehen, die wie oben beschrieben die Kanäle für die Spannkabel aufweisen. Im Bereich dieser Ausnehmungen ist der jeweilige Kanal zugänglich und somit kann an den Ausnehmungen ein Kabel in den Kanal eingeführt und soweit hineingeschoben werden, bis das Kabel an der anderen Seite aus dem Kanal austritt und in die Ausnehmung ragt. Hierauf wird das Kabel mit Hilfe eines Spannmechanismus gespannt und die Enden mit einem Spannmittel, beispielsweise mit einem Spannschloss festgelegt.

Gemäß einer bevorzugten Ausführungsform der vorliegenden Erfindung sind die Ausnehmungen zur Aufnahme von Spannmitteln für Spannkabel aus randständig an benachbarten Ringabschnitten vorgesehenen Ausnehmungen gebildet. Eine Ausnehmung wird somit von zwei Teilausnehmungen an im erfindungsgemäßen Fundament benachbart zu liegen kommenden Ringabschnitten gebildet, was im Rahmen der vorliegenden Erfindung deshalb von Vorteil ist, weil die Herstellung einer randständigen Ausnehmung bei vorgefertigten Betonelementen insofern leichter zu bewerkstelligen ist als die Herstellung einer Ausnehmung, die vollständig vom vorgefertigten Betonteil umschlossen ist, da sich ein vorgefertigtes Betonteil mit einer randständigen Ausnehmung leichter entformen lässt.

Die vorliegende Erfindung ist mit Vorteil dahingehend weitergebildet, dass die Standfläche Vertiefungen zur Aufnahme von Wandelementen eines Windkraftwerksturms und/oder zur Aufnahme eines Adapters für die Montage eines Windkraftwerksturms aufweist. Die Wandelemente des Windkraftwerksturms, die zur Ausbildung von Türmen mit rundem oder mehreckigen Querschnitten ausgeformt sein können, werden mit dieser bevorzugten Maßnahme formschlüssig am Standring gesichert. Wenn ein geeigneter Adapter in die Vertiefungen der stirnseitigen Standfläche eingesetzt wird, kann insbesondere ein Stahlturm auf dem Adapter errichtet werden, wobei der Adapter zusätzlich eine Höhenanpassung auf eine maximale zugelassene Bauhöhe des Windkraftwerks gestattet.

Bevorzugt bestehen die vorgefertigten Betonelemente aus verstärktem Beton, der eine Verstärkungsstruktur, insbesondere Verstärkungselemente, -profile, -stangen oder -drähte, aufweist, welche in die vorgefertigten Betonelemente eingebettet sind und/oder die als Spannelemente zum Zusammenspannen der vorgefertigten Betonelemente zu Spannbetonelementen ausgebildet sind.

Die vorliegende Erfindung ist gemäß einer bevorzugten Ausführungsform dahingehend weitergebildet, dass eine Verbindungsstruktur bereitgestellt ist, welche sich jeweils zwischen gegenüberliegenden vorgefertigten Betonelementen, insbesondere in Form von Spannkabeln, insbesondere unter Zwischenschaltung zumindest eines kreisförmigen Spannelements erstreckt. Eine solche Verbindungsstruktur ist als Ergänzung zu den umlaufenden Spannkabeln gedacht und verbindet gegenüberliegende vorgefertigte Betonelemente direkt durch radiale Verspannung durch den Mittelpunkt des Fundaments. Hierbei kann ein kreisförmiges Spannelement in Form eines Spanntellers zwischengeschaltet sein, an welchem radial verlaufende Spannkabel festgelegt und gespannt werden können. Diese Verbindungsstruktur kann im Bereich des die Standfläche ausbildenden Endes des Standrings und/oder im Bereich des die Stützelemente aufweisenden Endes des Standrings ausgebildet sein.

Um den Hohlraum innerhalb des aus Basisring und Aufbauring bestehenden Standrings an seinem Boden zu schließen, sieht eine bevorzugte Ausführungsform der vorliegenden Erfindung vor, dass der sich am der Standfläche gegenüberliegenden Ende des Standrings radial nach innen erstreckende umlaufende Vorsprung eine innenliegende Stufe zur Stützung einer Bodenplatte aufweist. Es wird somit ein kreisförmiger Rand gebildet, der eine zentrale Bodenplatte, die am Boden des Standrings angeordnet ist, umfänglich stützt.

Gemäß einer bevorzugten Ausführungsform der vorliegenden Erfindung weist eine Bodenplatte eine oder mehrere Betonstrukturen zur Befestigung von Hilfsinstallationen für das Windkraftwerk auf, insbesondere Vertiefungen zur Aufnahme von Wandelementen sowie Erhöhungen als Fundamente.

Der für die Herstellung der vorgefertigten Betonelemente verwendete Beton kann von einem beliebigen Typ sein, der typischerweise auch für das Gießen von Beton an der Verwendungsstelle verwendet wird. Zusätzlich zu Zuschlagstoffen und Wasser enthält Beton Zement als hydraulisches Bindemittel.

Es kann auch faserverstärkter Beton verwendet werden, um die vorgefertigten Betonelemente herzustellen. Die Fasern können aus einem beliebigen Fasermaterial bestehen, das zur Erhöhung der strukturellen Integrität, insbesondere der Stärke, der Stoßfestigkeit und/oder der Haltbarkeit, der sich ergebenden Betonstruktur beiträgt. Faserverstärkter Beton enthält kurze diskrete Verstärkungsfasern, die gleichmäßig verteilt und zufällig orientiert sind.

Vorzugsweise sind die Verstärkungsfasern Kohlefasern, synthetische Fasern und insbesondere Polypropylenfasern. Alternativ können die Verstärkungsfasern Stahlfasern, Glasfasern oder Naturfasern sein. Weiters ist auch die Verwendung von HPC (High Performance Concrete) und UHPC (Ultra High Performance Concrete) möglich. Diese Betonarten sind hochfeine Bindemittel mit speziellen, hochfeinen Zuschlagstoffen und entsprechenden Additiven und sind aufgrund ihres relativ geringen Gewichts als vorteilhaft anzusehen.

Die erfindungsgemäße Windturbine mit einem einen Rotor umfassenden Windturbinenturm, ist auf einem wie oben beschriebenen Fundament montiert und kann daher schnell und kostengünstig errichtet werden. Darüberhinaus ist das erfindungsgemäße Fundament relativ einfach zerlegbar, sodass ein Rückbau mit vertretbarem Aufwand möglich ist.

Die Erfindung wird nachfolgend anhand eines in der Zeichnung dargestellten Ausführungsbeispiels näher erläutert. In dieser zeigen:
Fig. 1 eine perspektivische Ansicht des erfindungsgemäßen Fundaments,
Fig. 2 eine perspektivische Ansicht eines einzelnen Ringabschnitts des erfindungsgemäßen Fundaments,
Fig. 3 eine perspektivische Ansicht gemäß Fig. 1 ergänzt durch eine zusätzliche Verbindungsstruktur mit einem Spannteller und
Fig. 4 eine perspektivische Ansicht gemäß Fig. 1 ergänzt durch einen Adapter für die Montage eines Windkraftwerksturms.

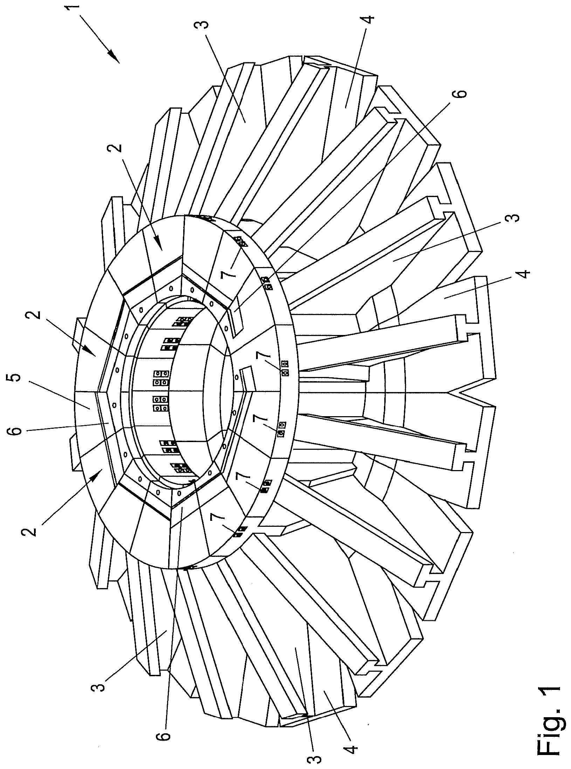

In Fig. 1 ist das erfindungsgemäße Fundament allgemein mit dem Bezugszeichen 1 bezeichnet. Das Fundament 1 ist aus einer Mehrzahl von gleichartigen vorgefertigten Betonelementen zusammengesetzt, die jeweils einen Ringabschnitt 2 aufweisen, der durch Verstrebungsrippen 3 an Stützelementen 4 abgestützt ist. Die Ringabschnitte 2 bilden zusammen einen Standring aus. Der Standring hat im in Fig. 1 gezeigten Beispiel einen kreisringförmigen Querschnitt, der Querschnitt kann jedoch auch andere Geometrien aufweisen und insbesondere polygonal sein. Unterschiede zwischen den Betonelementen sind im Bereich der stirnseitigen Standfläche 5 für einen nicht dargestellten Windkraftwerksturm auszumachen, auf der Vertiefungen 6 zur Aufnahme von Wandelementen eines Windkraftwerksturms vorgesehen sind. Die vorgefertigten Betonelemente bestehen aus verstärktem Beton, der eine Verstärkungsstruktur, im vorliegenden Fall in Form von Spannelementen 7 zum Zusammenspannen der vorgefertigten Betonelemente zu Spannbetonelementen ausgebildet sind. Die Spannelemente 7 bestehen aus Zugstangen, die endseitig mit Schrauben unter Zug gesetzt werden, um den Beton zu spannen. In einem inneren Bereich A liegen die Stützelemente 4 benachbarter Betonelemente aneinander an und stützen sich somit aneinander ab. Wenn das Fundament durch Spannkabel zusammengespannt wird, können auf diese Weise große Reibungskräfte übertragen werden, die einem Verschieben der Betonelemente gegeneinander entgegen wirken.

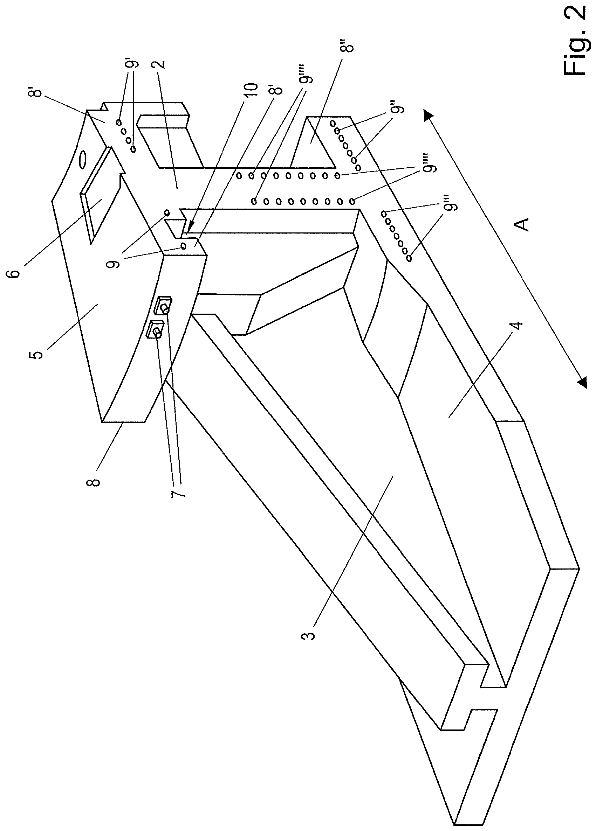

In der Darstellung gemäß Figur 2, ist zu erkennen, dass das Betonelement an seinem die Standfläche 5 ausbildenden Ende einen umlaufenden, sich vom Ringabschnitt 2 radial nach außen erstreckenden Vorsprung 8 aufweist. Der Vorsprung 8 ist von einer Mehrzahl von Kanälen 9 zur Aufnahme von Spannkabeln durchsetzt, die im zusammengesetzten Zustand des Fundaments einen umlaufenden Kabelkanal bilden, in dem ein Spannkabel auf relativ großem Umfang um den zentralen Ring verlaufen kann, um die Betonelemente zusammenzuspannen. Mit 10 ist eine randständige Ausnehmung zur Aufnahme von nicht dargestellten Spannmitteln für Spannkabel bezeichnet, die im vorliegenden Fall drei Kanäle 9 zur Aufnahme von Spannkabeln zugänglich macht. Die drei Kanäle 9 führen am in Figur 2 nicht ersichtlichen Boden der Ausnehmung 10 in den Körper des Vorsprungs 8. An anderen Betonelementen befindet sich die Ausnehmung 10 an radial weiter innen bzw. weiter außen liegender Position, um die anderen Kanäle 9 für Spannmittel zugänglich zu machen. Weitere Kanäle 9', 9" und 9‴ sind im sich vom die Standfläche ausbildenden Ende nach innen erstreckenden Vorsprung 8' und im sich vom die Stützelemente aufweisenden Ende radial nach innen erstreckenden Vorsprung 8" sowie in dem Stützelement 4 vorgesehen, um Spannkabel aufzunehmen, damit das Fundament aus den aus vorgefertigten Betonelementen bestehenden Ringabschnitten 2 ohne Verschraubungen zusammengefügt werden kann. Zu demselben Zweck weist der Ringabschnitt 2 weitere Kanäle 9ʺʺ auf.

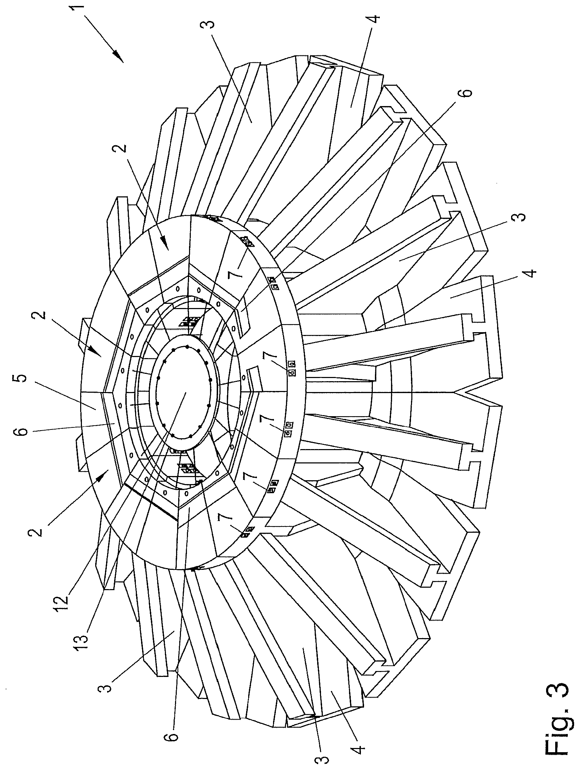

In Fig. 3 sind gleiche Teile mit gleichen Bezugszeichen versehen und es ist zu erkennen, dass eine zusätzliche Verbindungsstruktur in Form von Spannkabeln 12 vorgesehen ist, die einander gegenüberliegende vorgefertigte Betonelemente des Fundaments 1 durch in radialer Richtung verlaufende Spannkabel 12 miteinander verbinden. Die Spannkabel 12 erstrecken sich unter Zwischenschaltung eines kreisförmigen Spannelements bzw. Spanntellers 13 zwischen gegenüberliegenden vorgefertigten Betonelementen des Fundaments 1 und können an diesem festgelegt und gespannt werden. Eine gleichartige Verbindungsstruktur kann im Bereich des die Stützelemente 4 aufweisenden Endes des Standrings vorgesehen sein.

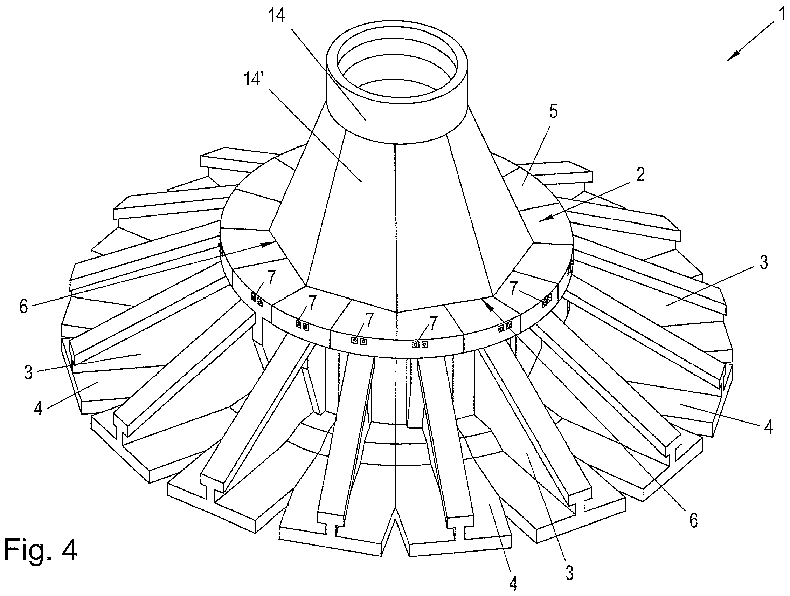

In Fig. 4 sind wiederum gleiche Teile mit gleichen Bezugszeichen versehen und es ist zu erkennen, dass ein Adapter 14 für die Montage eines Windkraftwerksturms mit geeigneten Wandelementen 14' in den Vertiefungen 6 der stirnseitigen Standfläche 5 aufgenommen sein kann. Mit einem solchen Adapter 14 kann beispielsweise auch ein Stahlturm besonders einfach auf dem erfindungsgemäßen Fundament 1 montiert werden. Zusätzlich kann der Adapter 14 in verschiedenen Höhenabstufungen hergestellt werden, um eine Anpassung der Bauhöhe des Windkraftwerks an eine maximal genehmigte Bauhöhe zu gestatten, wenn entsprechende Masten nur in einigen wenigen, grob abgestuften Höhenvarianten zur Verfügung stehen.

## Patentansprüche

1. Fundament (1) für ein Windkraftwerk mit einem in mehrere Ringabschnitte (2) unterteilten, aus vorgefertigten Betonelementen zusammengesetzten Standring mit einer Standfläche (5) für einen Windkraftwerksturm und mehreren sich vom Standring radial nach außen erstreckenden Stützelementen (4), wobei der Standring durch Verstrebungsrippen (3) an den Stützelementen (4) abgestützt ist, **dadurch gekennzeichnet, dass** der Standring an seinem die Standfläche (5) ausbildenden Ende einen umlaufenden, sich vom Standring radial nach außen erstreckenden Vorsprung (8) aufweist mit zumindest einem im Vorsprung (8) vorgesehenen und in Umfangsrichtung verlaufenden Kanal (9) zur Aufnahme eines Spannkabels.

2. Fundament nach Anspruch 1, **dadurch gekennzeichnet, dass** der Standring an seinem die Standfläche (5) ausbildenden Ende einen umlaufenden, sich vom Standring radial nach innen erstreckenden Vorsprung (8') aufweist mit zumindest einem im Vorsprung (8') vorgesehenen und in Umfangsrichtung verlaufenden Kanal (9') zur Aufnahme eines Spannkabels.

3. Fundament nach einem der Ansprüche 1 oder 2, **dadurch gekennzeichnet, dass** die Stützelemente (4) zumindest einen in Umfangsrichtung verlaufenden Kanal (9‴) zur Aufnahme eines Spannkabels aufweisen.

4. Fundament nach einem der Ansprüche 1, 2 oder 3, **dadurch gekennzeichnet, dass** die Stützelemente (4) benachbarter Ringabschnitte (2) in einem radial inneren Bereich (A) aneinander anliegen.

5. Fundament nach einem der Ansprüche 1 bis 4, **dadurch gekennzeichnet, dass** die Stützelemente (4) sich von dem der Standfläche gegenüberliegenden Ende des Standrings radial nach außen erstrecken und der Standring an seinem die Stützelemente (4) aufweisenden Ende einen umlaufenden, sich vom Standring radial nach innen erstreckenden Vorsprung (8") aufweist mit zumindest einem im Vorsprung (8") vorgesehenen und in Umfangsrichtung verlaufenden Kanal (9") zur Aufnahme eines Spannkabels.

6. Fundament nach einem der Ansprüche 2 bis 5, **dadurch gekennzeichnet, dass** im umlaufenden, sich vom Standring am die Standfläche ausbildenden Ende radial nach innen erstreckenden Vorsprung (8') zusätzlich in Achsrichtung des Standringes verlaufende Kanäle vorgesehen sind zur Aufnahme von Verankerungsmitteln zum Verankern des Windkraftwerksturms am Standring, insbesondere in Form von Ankerbolzen und/oder Seilverspannungen.

7. Fundament nach einem der Ansprüche 1 bis 6, **dadurch gekennzeichnet, dass** ein Ringabschnitt (2) mit zumindest einem sich vom Ringabschnitt (2) radial nach außen erstreckenden Stützelement (4) mit einer Verstrebungsrippe (3) jeweils als vorgefertigtes Betonelement einstückig ausgebildet ist.

8. Fundament nach einem der Ansprüche 1 bis 7, **dadurch gekennzeichnet, dass** ein Ringabschnitt (2) zumindest zwei sich vom Ringabschnitt (2) radial nach außen erstreckende Stützelemente (4) mit jeweils einer Verstrebungsrippe (3) umfasst.

9. Fundament nach einem der Ansprüche 1 bis 8, **dadurch gekennzeichnet, dass** die in Umfangsrichtung verlaufenden Kanäle (9, 9', 9ʺ, 9‴, 9‴) durch Ausnehmungen (10) zur Aufnahme von Spannmitteln für Spannkabel zugänglich gemacht sind.

10. Fundament nach Anspruch 9, **dadurch gekennzeichnet, dass** die Ausnehmungen (10) zur Aufnahme von Spannmitteln für Spannkabel aus randständig an benachbarten Ringabschnitten (2) vorgesehenen Ausnehmungen (10) gebildet sind.

11. Fundament nach einem der Ansprüche 1 bis 10, **dadurch gekennzeichnet, dass** die Standfläche (5) Vertiefungen (6) zur Aufnahme von Wandelementen eines Windkraftwerksturms und/oder zur Aufnahme eines Adapters (14) für die Montage eines Windkraftwerksturms aufweist.

12. Fundament nach einem der Ansprüche 1 bis 11, **dadurch gekennzeichnet, dass** die vorgefertigten Betonelemente aus verstärktem Beton bestehen, der eine Verstärkungsstruktur, insbesondere Verstärkungselemente, -profile, -stangen oder - drähte, aufweist, welche in die vorgefertigten Betonelemente eingebettet sind und/oder die als Spannelemente (7) zum Zusammenspannen der vorgefertigten Betonelemente zu Spannbetonelementen ausgebildet sind.

13. Fundament nach einem der Ansprüche 1 bis 12, **dadurch gekennzeichnet, dass** eine Verbindungsstruktur bereitgestellt ist, welche sich jeweils zwischen gegenüberliegenden vorgefertigten Betonelementen, insbesondere in Form von Spannkabeln (12), insbesondere unter Zwischenschaltung zumindest eines kreisförmigen Spannelements (13) erstreckt.

14. Fundament nach einem der Ansprüche 5 bis 13, **dadurch gekennzeichnet, dass** eine am Boden des Standringes angeordnete, zentrale Bodenplatte bereitgestellt ist und der sich am die Stützelemente (4) aufweisenden Ende vom Stützring radial nach innen erstreckende umlaufende Vorsprung (8") eine innenliegende Stufe zur Stützung der Bodenplatte aufweist.

15. Fundament nach Anspruch 14, **dadurch gekennzeichnet, dass** die Bodenplatte eine oder mehrere Betonstrukturen zur Befestigung von Hilfsinstallationen für das Windkraftwerk aufweist, insbesondere Vertiefungen zur Aufnahme von Wandelementen sowie Erhöhungen als Fundamente.

16. Windturbine mit einem einen Rotor umfassenden Windturbinenturm, wobei der Windturbinenturm auf einem Fundament nach einem der Ansprüche 1 bis 15 montiert ist.

## Claims

1. Foundation (1) for a windmill comprising an annular pedestal, which is divided into several ring sections (2) and is composed of prefabricated concrete elements, said pedestal comprising a platform (5) for a windmill tower and several support elements (4) extending radially outward from the pedestal, wherein the pedestal is supported by strut ribs (3) on the support elements (4), **characterized in that** the pedestal, at its end forming the platform (5), comprises a circumferential projection (8) extending radially outward from the pedestal and comprising at least one channel (9) for receiving a tensioning cable, said channel (9) being provided in the projection (8) and extending in the circumferential direction.

2. Foundation according to claim 1, **characterized in that** the annular pedestal, at its end forming the platform (5), comprises a circumferential projection (8') extending radially inward from the pedestal and comprising at least one channel (9') for receiving a tensioning cable, said channel (9') being provided in the projection (8') and extending in the circumferential direction.

3. Foundation according to any one of claims 1 or 2, **characterized in that** the support elements (4) have at least one circumferential channel (9‴) for receiving a tensioning cable.

4. Foundation according to any one of claims 1, 2 or 3, **characterized in that** the support elements (4) of adjacent ring sections (2) bear against one another in a radially inner region (A) .

5. Foundation according to any one of claims 1 to 4, **characterized in that** the support elements (4) extend radially outward from the end of the pedestal opposite the platform, and the pedestal, at its end having the support elements (4), comprises a circumferential projection (8") extending radially inward from the pedestal and comprising at least one channel (9") provided therein for receiving a tensioning cable, said channel (9'') extending in the circumferential direction.

6. Foundation according to any one of claims 2 to 5, **characterized in that** channels are additionally provided in the circumferential projection (8') that extends radially inwardly from the platform end of the pedestal, wherein said channels extend in the axial direction of the annular pedestal and are provided for receiving anchoring means for anchoring of the windmill tower on the pedestal, in particular in the form of anchor bolts and/or tensioning cables.

7. Foundation according to any one of claims 1 to 6, **characterized in that** a ring section (2) and at least one support element (4) extending radially outwardly from the ring section (2) with a strut rib (3) are formed in one piece as a prefabricated concrete element.

8. Foundation according to any one of claims 1 to 7, **characterized in that** a ring section (2) comprises at least two support elements (4) extending radially outwardly from the ring section (2), each support element (4) having a strut rib (3).

9. Foundation according to any one of claims 1 to 8, **characterized in that** the circumferential channels (9, 9', 9", 9‴, 9ʺʺ) are accessible through recesses (10) for receiving tensioning means for tensioning cables.

10. Foundation according to claim 9, **characterized in that** the recesses (10) for receiving tensioning means for tensioning cables are formed from recesses (10) provided at the edge on adjacent ring sections (2).

11. Foundation according to any one of claims 1 to 10, **characterized in that** the platform (5) has depressions (6) for receiving wall elements of a windmill tower and/or for receiving an adapter (14) for the assembly of a windmill tower.

12. Foundation according to any one of claims 1 to 11, **characterized in that** the prefabricated concrete elements consist of reinforced concrete which has a reinforcement structure, in particular reinforcement elements, profiles, rods or wires, which are embedded in the prefabricated concrete elements and/or which are designed as tensioning elements (7) for tensioning the prefabricated concrete elements together to form prestressed concrete elements.

13. Foundation according to any one of claims 1 to 12, **characterized in that** a connecting structure is provided which extends between opposing prefabricated concrete elements, in particular in the form of tensioning cables (12), in particular with the interposition of at least one circular tensioning element (13).

14. Foundation according to any one of claims 5 to 13, **characterized in that** a central base plate is provided which is arranged on the bottom of the pedestal and the circumferential projection (8ʺ) extending radially inward from the end of the pedestal that comprises the support elements (4), has an inner step for supporting the base plate.

15. Foundation according to claim 14, **characterized in that** the base plate comprises one or more concrete structures for fastening auxiliary installations for the windmill, in particular depressions for receiving wall elements and elevations as foundations.

16. Windmill with a windmill tower comprising a rotor, the windmill tower being mounted on a foundation according to any one of claims 1 to 15.

## Revendications

1. Fondation (1) pour une centrale éolienne avec un anneau de base divisé en plusieurs sections d'anneau (2) et composé d'éléments préfabriqués en béton, comprenant une surface de base (5) pour une tour de centrale éolienne et plusieurs éléments de support (4) s'étendant radialement vers l'extérieur à partir de l'anneau de base, l'anneau de base prenant appui sur les éléments de support (4) par l'intermédiaire de nervures de contreventement (3), **caractérisée en ce que** l'anneau de base présente, à son extrémité formant la surface de base (5), une saillie périphérique (8) s'étendant radialement vers l'extérieur à partir de l'anneau de base avec au moins un canal (9) prévu dans la saillie (8) et s'étendant dans la direction circonférentielle pour recevoir un câble de tension.

2. Fondation selon la revendication 1, **caractérisée en ce que** l'anneau de base présente, à son extrémité formant la surface de base (5), une saillie périphérique (8') s'étendant radialement vers l'intérieur à partir de l'anneau de base, avec au moins un canal (9') prévu dans la saillie (8') et s'étendant dans la direction circonférentielle pour recevoir un câble de tension.

3. Fondation selon l'une des revendications 1 ou 2, **caractérisée en ce que** les éléments de support (4) présentent au moins un canal (9‴) s'étendant dans la direction circonférentielle pour recevoir un câble de tension.

4. Fondation selon l'une des revendications 1, 2 ou 3, **caractérisée en ce que** les éléments de support (4) de sections d'anneau (2) adjacents s'appuient les uns contre les autres dans une zone radialement intérieure (A).

5. Fondation selon l'une des revendications 1 à 4, **caractérisée en ce que** les éléments de support (4) s'étendent radialement vers l'extérieur à partir de l'extrémité de l'anneau de base opposée à la surface de base, et l'anneau de base présente, à son extrémité comportant les éléments de support (4), une saillie périphérique (8") s'étendant radialement vers l'intérieur à partir de l'anneau de base, avec au moins un canal (9") étant prévu dans la saillie (8") et s'étendant dans la direction circonférentielle pour recevoir un câble de tension.

6. Fondation selon l'une des revendications 2 à 5, **caractérisée en ce que** des canaux s'étendent radialement vers l'extérieur à partir de l'anneau de base à l'extrémité formant la surface de base, et s'étendant en outre dans la direction axiale de l'anneau de base, sont prévus dans la saillie périphérique (8') pour recevoir des moyens d'ancrage pour ancrer la tour de centrale éolienne à l'anneau de base, notamment sous la forme de boulons d'ancrage et/ou de câbles tendus.

7. Fondation selon l'une des revendications 1 à 6, **caractérisée en ce qu'**une section d'anneau (2) avec au moins un élément de support (4) s'étendant radialement vers l'extérieur à partir de la section d'anneau (2) avec une nervure de contreventement (3) est respectivement réalisé d'une seule pièce comme élément préfabriqué en béton.

8. Fondation selon l'une des revendications 1 à 7, **caractérisée en ce qu'**une section d'anneau (2) comporte au moins deux éléments de support (4) s'étendant radialement vers l'extérieur à partir de la section d'anneau (2), dont chacun comprend une nervure de contreventement (3).

9. Fondation selon l'une des revendications 1 à 8, **caractérisée en ce que** les canaux (9, 9', 9", 9"', 9‴) s'étendant dans la direction circonférentielle sont rendues accessibles par des évidements (10) pour recevoir des moyens de tension pour des câbles de tension.

10. Fondation selon la revendication 9, **caractérisée en ce que** les évidements (10) pour recevoir des moyens de tension pour des câbles de tension sont formés d'évidements (10) prévus sur les bords de sections d'anneau (2) adjacents.

11. Fondation selon l'une des revendications 1 à 10, **caractérisée en ce que** la surface de base (5) présente des indentations (6) pour recevoir des éléments de paroi d'une tour de centrale éolienne et/ou pour recevoir un adaptateur (14) pour le montage d'une tour de centrale éolienne.

12. Fondation selon l'une des revendications 1 à 11, **caractérisée en ce que** les éléments préfabriqués en béton sont constitués de béton armé ayant une structure de renforcement, notamment des éléments, des profilés, des tiges ou des fils de renforcement, qui sont noyés dans les éléments préfabriqués en béton et/ou qui sont conçus comme des éléments de tension (7) pour serrer les éléments préfabriqués en béton ensemble pour former des éléments en béton précontraint.

13. Fondation selon l'une des revendications 1 à 12, **caractérisée en ce qu'**il est prévu une structure de liaison qui s'étend respectivement entre des éléments préfabriqués en béton opposés, notamment sous la forme de câbles de tension (12), notamment avec interposition d'au moins un élément de tension circulaire (13).

14. Fondation selon l'une des revendications 5 à 13, **caractérisée en ce qu'**il est prévu une plaque de fond centrale qui est agencée sur le fond de l'anneau de base, et la saillie périphérique (8") s'étendant radialement vers l'intérieur à l'extrémité comprenant les éléments de support (4) présente une marche interne pour supporter la plaque de fond.

15. Fondation selon la revendication 14, **caractérisée en ce que** la plaque de fond présente une ou plusieurs structures en béton pour la fixation d'installations auxiliaires pour la centrale éolienne, notamment des indentations pour recevoir des éléments de paroi ainsi que des élévations comme fondations.

16. Éolienne comprenant une tour d'éolienne comprenant un rotor, la tour d'éolienne étant montée sur une fondation selon l'une des revendications 1 à 15.
